Europäisches Patentamt

European Patent Office

Office européen des brevets

(11) Publication number: **0 428 308 A2**

# EUROPEAN PATENT APPLICATION

(21) Application number: 90312079.8

(51) Int. Cl.5: **G11B 7/09**

(22) Date of filing: 05.11.90

(30) Priority: 15.11.89 JP 295111/89

(43) Date of publication of application:
22.05.91 Bulletin 91/21

(84) Designated Contracting States:
**DE FR GB NL**

(71) Applicant: **SONY CORPORATION**
7-35, Kitashinagawa 6-chome Shinagawa-ku
Tokyo(JP)

(72) Inventor: **Terada, Akio**
c/o Sony Corporation, 7-35 Kitashinagawa
6-chome
Shinagawa-ku, Tokyo(JP)

(74) Representative: **Ayers, Martyn Lewis Stanley
et al**
J.A. KEMP & CO., 14 South Square, Grays Inn
London WC1R 5LX(GB)

(54) **Tracking control circuit.**

(57) A tracking control circuit for, for example, an optical disc apparatus, for performing a tracking by feeding back a tracking error signal corresponding to deviation of an optical beam from a recording track in the track pitch direction and a differentiated signal of the tracking error signal. Stable tracking control insusceptible to runaway may be realised by feeding back a polarity inverted signal of the differentiated signal during the off-track condition.

FIG.3

EP 0 428 308 A2

## TRACKING CONTROL CIRCUIT

This invention relates to a tracking control circuit for performing a tracking control by feeding back a tracking error signal corresponding to the tracking deviation with respect to a recording track in the track pitch direction and a differentiated signal of the tracking error signal. This invention may be applied to, for example, an optical disc apparatus in which the recording track or tracks of a circumambient pattern formed on the optical disc are scanned by an optical beam from an optical head for recording and/or reproducing information signals along the recording track. The expression "circumambient pattern" is intended to include, inter alia, tracking which are spiral or concentric.

With an optical disc apparatus in which recording track or tracks formed on an optical disc in a circumambient pattern are scanned by a light beam from an optical head for recording and/or reproducing signals along the recording track, it is necessary to perform tracking control so that the recording track will be correctly scanned by the beam spot of the light beam scanning the recording track. To this end, a tracking error signal corresponding to the deviation of the light spot from the recording track in the track pitch direction is derived from a detection signal from the optical head and fed back to a tracking actuator driving circuit for bringing the centre of the light beam spot into coincidence with the track centre by way of performing the tracking control. Known methods of tracking error detection include a three-beam method and a push-pull method.

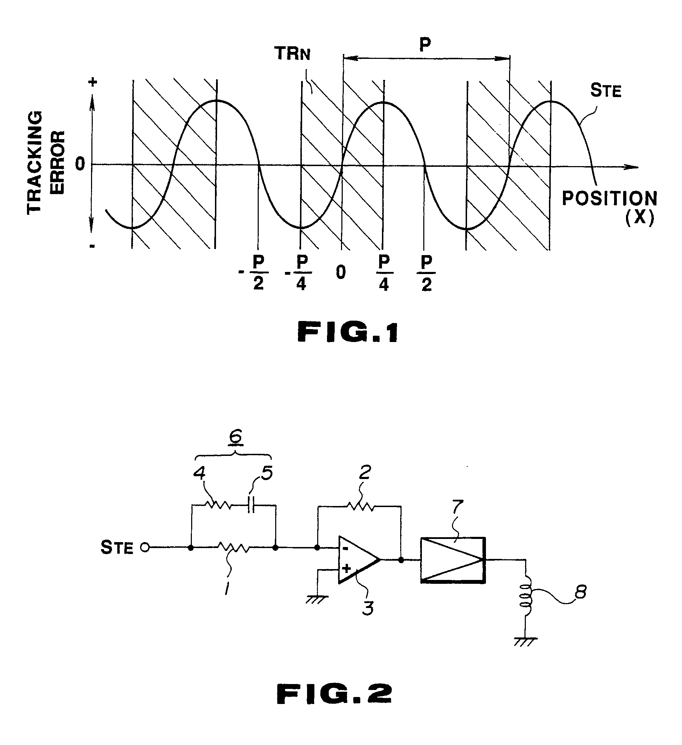

In conventional optical disc apparatus, when the beam spot traverses the recording track, the tracking error signal $S_{TE}$ which varies sinusoidally as indicated by the formula:
$$S_{TE} = A\sin\left(2\pi \frac{x}{p}\right)$$
herein x denotes the displacement of the beam spot from the track centre of a recording track $TR_N$ in the track pitch direction and p denotes the track pitch, is derived from a detection output from the optical head, as shown in figure 1 of the accompanying drawings, and tracking control is performed by a tracking control circuit having a circuit configuration as shown for example in figure 2 so that this tracking error signal $S_{TE}$ will be reduced towards zero.

The tracking control circuit shown in figure 2 has an inverting amplifier circuit constituted by an input resistor 1, a feedback resistor 2 and an operational amplifier 3. A phase compensation circuit 6 comprised of a serial circuit of a resistor 4 and a capacitor 5 is connected in parallel with the input resistor 1 of the inverting amplifier circuit.

With the above described conventional tracking control circuit, the tracking error signal $S_{TE}$ is supplied by the inverting amplifier circuit to a tracking actuator driving circuit 7 and, by way of performing tracking control, a tracking control current is caused to flow in the tracking actuator coil 8 by the tracking actuator driving circuit 7 so that the tracking error signal $S_{TE}$ will be reduced towards zero. The phase compensation circuit 6 connected in parallel with the input resistor 1 feed back the speed data component derived by differentiating the tracking error signal $S_{TE}$ to the tracking actuator driving circuit 7 for stabilising the tracking control operation by the tracking error signal $S_{TE}$.

With the above described conventional tracking control circuit including the phase compensation circuit 6 adapted for feeding back the speed data component to the tracking actuator driving circuit 7, the tracking control operation may be stabilised by the phase compensation circuit 6 in the on-track state, that is, with the beam spot on the centre of a target recording track; however, since the speed data component is produced in the phase compensation circuit 6 by differentiating the tracking error signal $S_{TE}$, the tracking control operation by the tracking error signal $S_{TE}$ cannot be damped in the off-track state because of the properties of the tracking error signal $S_{TE}$ which, as noted above, varies as a sine wave, resulting in an increased tendency towards runaway of the control operation.

It is therefore an object of the present invention to provide a tracking control circuit in which runaway of the control operation may be prevented even in the off-track state when the beam spot is off the track centre, and the control operation may be repositioned promptly on the target track.

In accordance with the present invention, there is provided a tracking control circuit for performing a tracking control by supplying a tracking error signal corresponding to a deviation with respect to a recording track in a track pitch direction comprising

differentiating means for differentiating said tracking error signal, and

polarity inverting means for inverting the polarity of a differentiated signal from said differentiating means during off-track and

wherein the arrangement is such that tracking control is performed by feeding back said tracking error signal and said differentiated signal.

The invention will be further described by way of non-limitative example with reference to the accompanying drawings, in which:-

Figure 1 is a signal waveform diagram for illustrating tracking error signals in an optical disc device.

Figure 2 is a circuit diagram showing a circuit construction of a conventional tracking control circuit.

Figure 3 is a circuit diagram showing a circuit construction of a tracking control circuit according to the present invention.

Figures 4A to 4D are signal waveform diagrams for illustrating the operation of the tracking control circuit shown in figure 3.

By referring to the drawings, an embodiment of a tracking control circuit according to the present invention will be explained in detail.

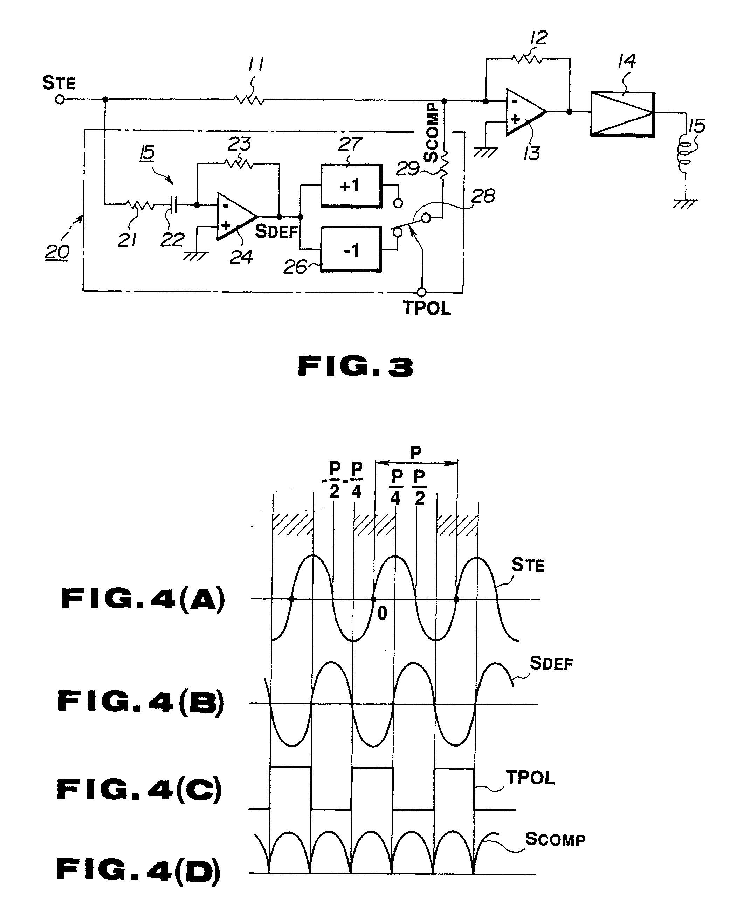

The circuit construction of one embodiment of the track control circuit according to the present invention is shown in figure 3, while various signal waveforms for illustrating the operation of this tracking control circuit are shown in figure 4.

With the tracking control circuit, the present invention is applied to an optical disc device in which, when the beam spot traverses a recording track, a tracking error signal $S_{TE}$ which varies sinusoidally as described above in connection with figure 1 is derived from a detection output from an optical head, and in which tracking control is performed so that the tracking error signal $S_{TE}$ will be reduced towards zero.

Referring to figure 3, the tracking control circuit of the present invention includes an inverting amplifier circuit constituted by an input resistor 11, a feedback resistor 12 and an operational amplifier 13. With this tracking control circuit, by way of performing a tracking control operation, the tracking error signal $S_{TE}$ is supplied by means of the inverting amplifier circuit to a tracking actuator driving circuit 14 and a tracking control current is caused to flow through a tracking actuator coil by the tracking actuator driving circuit 14 so that the tracking error signal $S_{TE}$ will be reduced towards zero.

The tracking control circuit also includes a phase compensation circuit 20 which is connected in parallel with input resistor 11 of the inverting amplifier circuit.

Referring to figure 3, the phase compensation circuit 20 includes an operational amplifier 24 having its output connected via feedback resistor 23 to its inverting input which is supplied with the tracking error signal $S_{TE}$ by means of an input circuit consisting of a serial circuit of a resistor 21 and a capacitor 22. The operational amplifier 24 constitutes a differentiating circuit 25 along with the input circuit consisting of the serial circuit of the resistor 21 and the capacitor 22 and the feedback resistor 23. The differentiating circuit 25 differentiates the tracking error signal $S_{TE}$ that is, a position data component, in the form of the sine wave shown in figure 4A to generate a differentiated signal $S_{DEF}$ in the form of a cosine wave shown in figure 4B, as a speed data component.

The phase compensation circuit 20 also includes a unity-gain inverting amplifier type buffer circuit 26 and a unity-gain non-inverting amplifier type buffer circuit 27, which are both supplied with the differentiated signal $S_{DEF}$ of the tracking error signal $S_{TE}$ from the differentiating circuit 25. The circuit 20 also includes a signal selection switching circuit 28 for selecting output signals from the buffer circuits 26 and 27.

The on-off control of the signal selection switching circuit 28 is performed by an on-track signal TPOL (figure 4C) showing the on-track state brought about by the tracking error signal $S_{TE}$. The signal selection switching circuit 28 selects the output signal of the inverting amplifier type buffer circuit 26 during off-track and selects an output signal of the non-inverting amplifier type buffer circuit 27 during on-track, respectively, and thus operates in a manner to rectify the differentiated signal $S_{DEF}$ of the tracking error signal $S_{TE}$ to generate a full-wave-rectified speed data signal $S_{COMP}$ having the same polarity during off-track and on-track. This speed data signal $S_{COMP}$ is supplied via resistor 29 to an inverting input of the operational amplifier 13 constituting the above mentioned inverting amplifier circuit.

With the tracking control circuit, provided with the above described phase compensation circuit 20, the tracking error signal $S_{TE}$ in the form of a sine wave, that is the position data component, is differentiated by the differentiating circuit 25 to produce the differentiated signal $S_{DEF}$ in the form of the cosine signal as the speed data component, which differentiated signal $S_{DEF}$ is inverted in polarity during off-track by the on-track signal TPOL to generate the speed data signal $S_{COMP}$ having the same polarity during off-track as during on-track, this speed data signal $S_{COMP}$ being fed back to the tracking actuator driving circuit 14. Thus the tracking control operation brought about by the tracking error signal $S_{TE}$ in the form of the sine wave can be damped positively by the speed data signal $S_{COMP}$ having the same polarity both during off-track and on-track conditions. In other words, during off-track when the beam spot is off the recording track, the differentiated signal $S_{DEF}$ of the tracking error signal $S_{TE}$ is inverted in polarity and is fed back as the speed data signal $S_{COMP}$ for damping the tracking control operation. Thus the beam spot may be promptly returned to the on-track state with respect to the target track with the least risk of runaway to provide for an extremely stable tracking control operation.

## Claims

1. A tracking control circuit for performing a tracking control by supplying a tracking error signal corresponding to a deviation with respect to a recording track in a track pitch direction comprising differentiating means for differentiating said tracking error signal, and

polarity inverting means for inverting the polarity of a differentiated signal from said differentiating means during off-track and

wherein the arrangement is such that tracking control is performed by feeding back said tracking error signal and said differentiated signal.

2. The tracking control circuit according to claim 1 wherein said polarity inverting means is so arranged as to form speed data signals having the same polarity during off-track and during on-track by inverting the polarity of said differentiated signal.

3. The tracking control according to claim 2 wherein said polarity inverting means comprises an inverting amplifier type buffer circuit and a non-inverting amplifier type buffer circuit, both of which are supplied with said differentiated signal.

4. The tracking control circuit according to claim 3 wherein said polarity inverting means comprises selection means for selectively outputting an output signal from said inverting amplifier type buffer circuit during off-track and an output signal from said non-inverting amplifier type buffer circuit during on-track.

5. The tracking control circuit according to claim 4 wherein said differentiating means and the polarity inverting means constitute a phase compensation circuit.

**FIG.1**

**FIG.2**

**FIG. 3**

FIG. 4(A)

FIG. 4(B)

FIG. 4(C)

FIG. 4(D)